# EUROPEAN PATENT APPLICATION

(11) **EP 3 886 215 A1**
(43) Date of publication of application: **29.09.2021**
(21) Application number: 21165004.9
(22) Date of filing: 25.03.2021
(51) Int. Cl.: H01M 4/131, C01G 53/00, H01M 4/1391, H01M 4/525, H01M 10/0525, H01M 4/02

(54) **CATHODE MATERIAL AND PROCESS**

(30) Priority: 27.03.2020 GB 202004497
(71) Applicant: Johnson Matthey Public Limited Company, London EC4A 4AB (GB)
(72) Inventor: COOMER, Fiona Claire, Reading, Berkshire RG4 9NH (GB); CORBIN, James Alexander, Reading, Berkshire RG4 9NH (GB); WALLAR, Cameron Jon, Reading, Berkshire RG4 9NH (GB)
(74) Representative: Lenden, Philip

(57) **Abstract**

The invention relates to improved particulate lithium nickel oxide materials which are useful as cathode materials in lithium secondary batteries, and methods of improving their safety.

## Description

### Field of the Invention

The present invention relates to improved particulate lithium nickel oxide materials which are useful as cathode materials in lithium secondary batteries, and methods of improving their safety.

### Background of the Invention

Lithium transition metal oxide materials having the formula LiMO₂, where M typically includes one or more transition metals, find utility as cathode materials in lithium ion batteries. Examples include LiNiO₂ and LiCoO₂.

US 6921609 B2 describes a composition suitable for use as a cathode material of a lithium battery which includes a core composition having an empirical formula LiₓM'_{z}Ni_{1-y}M"_{y}O₂ and a coating on the core which has a greater ratio of Co to Ni than the core.

WO 2013/025328 A1 describes a particle including a plurality of crystallites including a first composition having a layered α-NaFeO₂-type structure. The particles include a grain boundary between adjacent crystallites, and the concentration of cobalt in the grain boundaries is greater than the concentration of cobalt in the crystallites. Cobalt enrichment is achieved by treatment of the particles with a solution of LiNO₃ and Co(NO₃)₂, followed by spray drying and calcining.

US10,501,335 describes electrochemically active secondary particles characterized by enriched grain boundaries where the grain boundaries are enriched with Al.

There remains a need for improved lithium transition metal oxide materials and processes for their manufacture. In particular, there remains a need for improvements in the thermal stability of lithium transition metal oxide materials, and their safety characteristics when used as cathode materials in lithium secondary batteries.

### Summary of the Invention

The present inventors have found that the differential scanning calorimetry (DSC) onset temperature of lithium nickel oxide cathode materials can be increased by treating the material with a solution containing aluminium ions and optionally lithium ions. An increased DSC onset temperature is important as it demonstrates that the material has higher thermal stability, and is therefore safer when incorporated into lithium ion batteries. The DSC onset temperature is the highest temperature at which the material is stable before it begins releasing oxygen, which would cause a fire risk when the material is used in a battery.

In particular, as demonstrated in the Examples below, the present inventors have found that treating the material with a treatment solution containing aluminium ions and optionally lithium ions results in an enriched lithium nickel oxide cathode material comprising (i) a core comprising a plurality of grains and (ii) enriched regions at the surface of the core and at the grain boundaries within the core, with the enriched regions comprising a higher concentration of aluminium than the core. The inventors have also found that increasing the amount of aluminium added in the treatment step results in an increase in DSC onset temperature. Good electrochemical performance is retained where the treatment solution provides up to 5.5wt% aluminium based on the weight of metals in the lithium nickel oxide cathode material to be treated, excluding lithium.

Accordingly, in a first preferred aspect the present invention provides a method of increasing the differential scanning calorimetry onset temperature of a lithium nickel oxide cathode material, the method comprising
(a) contacting particulate lithium nickel oxide cathode material with a treatment solution comprising aluminium ions and optionally lithium ions to provide a treatment slurry;
(b) drying the treatment slurry to provide an intermediate treated material; and
(c) calcining the intermediate treated material to provide an enriched lithium nickel oxide cathode material comprising (i) a core comprising a plurality of grains and (ii) enriched regions at the surface of the core and at the grain boundaries within the core, the enriched regions comprising a higher concentration of aluminium than the core,
wherein the amount of aluminium ions included in the treatment solution is selected to provide 0.8 to 5.5 wt% aluminium based on the weight of metals in the lithium nickel oxide cathode material to be treated, excluding lithium.

Typically, the differential scanning colorimetry (DSC) onset temperature of the enriched lithium nickel oxide cathode material is at least 210°C, e.g. at least 215°C. Typically, the differential scanning colorimetry (DSC) peak temperature of the enriched lithium nickel oxide cathode material is at least 230°C.

According to a second preferred aspect, the present invention provides use of a treatment solution comprising aluminium ions and optionally lithium ions to increase the differential scanning calorimetry onset temperature of a lithium nickel oxide cathode material. The use may comprise a method according to the first aspect.

In a further preferred aspect the present invention provides an enriched particulate lithium nickel oxide cathode material comprising (i) a core comprising a plurality of grains and (ii) enriched regions at the surface of the core and at the grain boundaries within the core, the enriched regions comprising a higher concentration of aluminium than the core, the material having a DSC onset temperature of at least 210°C. The material may be obtained or obtainable by the process of the present invention.

In further aspects, the present invention provides a cathode comprising enriched particulate lithium nickel oxide cathode material according to the present invention, and a lithium secondary cell or battery (e.g. a secondary lithium ion battery) comprising the cathode. The battery typically further comprises an anode and an electrolyte.

### Brief Description of the Drawings

**Figure 1** shows the dependence of capacity at 0.1C on wt% Al in the treatment solution for samples prepared in the Examples.
**Figure 2** shows the dependence of capacity retention after 50 cycles at 1C on wt% Al in the treatment solution for samples prepared in the Examples.
**Figures 3A and 3B** show FIB-TEM images of two regions of a sample prepared in the Examples.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

The lithium nickel oxide cathode material contacted with the treatment solution typically has the α-NaFeO₂ crystal structure. It typically includes cobalt in addition to lithium, nickel and oxygen. It may have Formula I:

LiₐNiₓCO_{y}Mg_{z}M_{q}O_{2+b} Formula I

in which
0.8 ≤ a ≤ 1.2
0.7 ≤ x < 1
0 ≤ y ≤ 0.3
0 ≤ z ≤ 0.1
0 ≤ q ≤ 0.2, and
-0.2 ≤ b ≤ 0.2;
wherein M is selected from Al, Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

It may be preferred that a is greater than or equal to 0.9, 0.95, 0.99 or 1.0. It may be preferred that a is less than or equal to 1.1, or less than or equal to 1.05. It may be preferred that 0.90 ≤ a ≤ 1.10, for example 0.95 ≤ a ≤ 1.05. It may be preferred that 0.99 ≤ a ≤ 1.05 or 10 ≤ a ≤ 1.05. It may be particularly preferred that 0.95 ≤ a ≤ 1.05.

It may be preferred that x is less than or equal to 0.99, 0.98, 0.97, 0.96 or 0.95. It may be preferred that x is great than or equal to 0.8, 0.85, 0.9 or 0.95. It may be preferred that 08 ≤ x ≤ 0.99, for example 0.85 ≤ x ≤ 0.98, 0.85 ≤ x ≤ 0.98, 0.85 ≤ x ≤ 0.97, 0.85 ≤ x ≤ 0.96 or 0.90 ≤ x ≤ 0.95. It may be particularly preferred that 0.85 ≤ x ≤ 0.98.

It may be preferred that y is greater than or equal to 0.01, 0.02 or 0.05. It may be preferred that y is less than or equal to 0.25, 0.2, 0.1 or 0.10. For example, 0.01 ≤ y ≤ 0.3, 0.02 ≤ y ≤ 0.2, 0.02 ≤ y ≤ 0.1 or 0.02 ≤ y ≤ 0.10.

It may be preferred that z is greater than or equal to 0.001, 0.002 or 0.005. it may be preferred that z is less than or equal to 0.05, 0.02 or 0.01. For example, 0.001 ≤ z ≤ 0.05, 0.002 ≤ z ≤ 0.02 or 0.002 ≤ z ≤ 0.01.

It may be preferred that b is greater than or equal to -0.1. It may be preferred that b is less than or equal to 0.1. In some embodiments, -0.1 ≤ b ≤ 0.1. In some embodiments, b is 0 or about 0. In some embodiments, b is 0.

M is one or more selected from Al, Mn, V, Ti, B, Zr, Sr, Ca, Cu , Sn, Cr, Fe, Ga, Si, W, Mo, Ta, Y, Sc, Nb, Pb, Ru, Rh and Zn. It may be preferred that M is one or more selected from Mn, V, Ti, B, Zr, Sr, Ca, Cu , Sn, Cr, Fe, Ga, Si and Zn. It may be preferred that M is Mn. It may be preferred that 0 ≤ q ≤ 0.15. It may be preferred that 0 ≤ q ≤ 0.10. It may be preferred that 0 ≤ q ≤ 0.05. It may be preferred that 0 ≤ q ≤ 0.04. It may be preferred that 0 ≤ q ≤ 0.03. It may be preferred that 0 ≤ q ≤ 0.02. It may be preferred that 0 ≤ q ≤ 0.01. It may be preferred that q is 0.

For example, in Formula I it may be preferred that:
0.95 ≤ a ≤ 1.05
0.85 ≤ x < 0.95
0.02 ≤ y ≤ 0.1
0.002 ≤ z ≤ 0.02
0 ≤ q ≤ 0.05, and
-0.1 ≤ b ≤ 0.1.

The enriched lithium nickel oxide cathode material produced by the method of the present invention typically has the α-NaFeO₂ crystal structure. It typically includes cobalt and aluminium in addition to lithium, nickel and oxygen. It may have Formula II:

LiₐNiₓCO_{y}M_{g}zAlₚM1_{q}O_{2+b} Formula II

in which each of a, b, x, y, z and q are independently as defined above with reference to Formula I, 0.005 ≤ p ≤ 0.07, and M1 is selected from Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

Formula II is intended to be the overall formula of the material, i.e. including both the core and the enriched regions.

It may be preferred that p is greater than or equal to 0.008, 0.009 or 0.010, since lower amounts of aluminium can result in lower capacity retention and DSC onset temperatures. It may be preferred that p is less than or equal to 0.06, 0.05, 0.04, 0.035 or 0.03. This is because at higher aluminium contents, reduced capacity retention or specific capacity may be observed. It may be preferred that p is greater than or equal to 0.015 or 0.02, particularly where the treatment solution does not comprise lithium ions or comprises low levels of lithium ions. For example, it may be preferred that 0.01 ≤ p ≤ 0.055, 0.015 ≤ p ≤ 0.055 or 0.02 ≤ p ≤ 0.04, particularly where the treatment solution does not comprise lithium ions or comprises low levels of lithium ions.

It may be preferred that p is less than or equal to 0.02, 0.018 or 0.015, e.g. where the treatment solution comprises lithium ions. For example, where the treatment solution comprises lithium ions, it may be preferred that 0.009 ≤ p ≤ 0.02 or 0.009 ≤ p ≤ 0.018.

M1 is one or more selected from Mn, V, Ti, B, Zr, Sr, Ca, Cu , Sn, Cr, Fe, Ga, Si, W, Mo, Ta, Y, Sc, Nb, Pb, Ru, Rh and Zn. It may be preferred that M1 is one or more selected from Mn, V, Ti, B, Zr, Sr, Ca, Cu , Sn, Cr, Fe, Ga, Si and Zn. It may be preferred that M1 is Mn. In some embodiments, M1 represents a dopant which is present at a higher concentration within the core of the particle than within the enriched regions.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.008 ≤ p ≤ 0.055
0 ≤ q ≤ 0.05, and
-0.1 ≤ b ≤ 0.1.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.008 ≤ p ≤ 0.03
0 ≤ q ≤ 0.05, and
-0.1 ≤ b ≤ 0.1.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.015 ≤ p ≤ 0.03
0 ≤ q ≤ 0.05, and
-0.1 ≤ b ≤ 0.1
where the treatment solution comprises low levels of lithium ions or does not comprise lithium ions.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.008 ≤ p ≤ 0.015
0 ≤ q ≤ 0.05, and
-0.1 ≤ b ≤ 0.1
where the treatment solution comprises lithium ions.

The amount of aluminium ions included in the treatment solution is selected to provide 0.8 to 5.5 wt% aluminium based on the weight of metals in the lithium nickel oxide cathode material to be treated, excluding lithium. As used herein, wt% aluminium means the proportion of aluminium with respect to the total metals in the particulate lithium nickel oxide cathode material to be treated, excluding lithium. For example, where the particulate material to be treated has 100g of metals other than lithium, and 5.5g of aluminium is added in the treatment step, this is taken to be 5.5wt% aluminium. The amount of aluminium supplied to the particulate lithium nickel oxide material is taken as the amount of aluminium added to the treatment solution, assuming no aluminium loss.

The amount of aluminium ions included in the treatment solution may be selected to provide at least 0.9, 1.0 or 1.1 wt% aluminium.

The present inventors have found that where the treatment solution includes lithium ions, the capacity retention of the enriched lithium nickel oxide material begins to reduce where the amount of aluminium ions in the treatment solution provides more than about 1.9 wt% aluminium, and becomes particularly poor above about 3 wt%. Therefore, it may be preferred that the amount of aluminium ions in the treatment solution is selected to provide 3, 2.5, 2, 1.9, 1.7 or 1.5 wt% or less aluminium, particularly where the treatment solution includes lithium ions. For example, where the treatment solution contains lithium ions, the amount of aluminium ions in the treatment solution may be selected to provide 0.8 to 1.9, e.g. 0.9 to 1.7 wt% aluminium.

The present inventors have found that where the treatment solution does not contain significant levels of lithium ions, good capacity retention is retained at much higher aluminium contents. Therefore, it may be preferred that the amount of aluminium ions included in the treatment solution is selected to provide at least 0.5, 0.8, 1, 1.5, 2 or 2.2 wt% aluminium, particularly where the solution comprises a low level of lithium ions or does not comprise lithium ions. It may be preferred that the amount of aluminium ions included in the treatment solution is selected to provide 5, 4, 3.5, 3 or 2.8 wt% or less aluminium, particularly where the solution comprises a low level of lithium ions or does not comprise lithium ions. For example, it may be preferred that the amount of aluminium ions included in the treatment solution is selected to provide 1 to 3.5 wt%, 1.5 to 3 wt% or 2 to 3 wt% aluminium where the treatment solution comprises a low level of lithium ions or does not comprise lithium ions. It may be preferred that the treatment solution does not comprise lithium ions.

As used herein, where it is stated that the treatment solution does not comprise lithium ions, this is intended to mean that the treatment solution as prepared does not comprise intentionally added lithium ions. As the skilled person will understand, when the particulate lithium nickel oxide material is contacted with the treatment solution, lithium from the lithium nickel oxide material may become dissolved in the solution. A treatment solution comprising lithium ions originating substantially only from the lithium nickel oxide material added during the method of the present invention may be considered to be a treatment solution which does not comprise lithium ions. Where the treatment solution comprises a low level of lithium ions, the treatment solution as prepared may have a concentration of lithium ions of 0.005 mol/L or less, e.g. 0.001 mol/L or less or 0.0001 mol/L or less. The concentration of lithium ions in the treatment solution as prepared may be substantially zero.

Where the treatment solution comprises lithium ions, the amount of lithium ions may be selected to provide 0.1 to 6 wt% lithium based on the weight of metals in the lithium nickel oxide cathode material to be treated, excluding lithium. As used herein, wt% lithium means the proportion of the weight of lithium ions included in the treatment with respect to the weight of total metals in the particulate lithium nickel oxide cathode material to be treated, excluding lithium. For example, where the particulate material to be treated has 100g of metals other than lithium, and 5.5g of lithium is added in the treatment step, this is taken to be 5.5wt% lithium. The amount of lithium supplied is taken as the amount of lithium added to the treatment solution, assuming no lithium loss.

For example, the amount of lithium ions may be selected to provide at least 0.2, 0.5 or 1.0 wt% lithium. For example, the amount of lithium ions may be selected to provide 7, 5, 3 or 2 wt% or less lithium.

The treatment solution is typically an aqueous solution comprising aluminium ions, optionally lithium ions and suitable counterions. The nature of the counterions is not particularly limited and any suitable aluminium salt (or lithium) salt may be used. Aluminium nitrate may be particularly suitable. Lithium nitrate may be particularly suitable.

Where the treatment solution comprises lithium ions, the concentration of lithium ions in the treatment solution may be in the range from 0.01 mol/L to 0.8 mol/L. For example it may be at least 0.02, 0.03, 0.05, 0.08 or 0.1 mol/L. It may be 0.5, 0.3, 0.2 or 0.15 mol/L or less.

The concentration of aluminium ions in the treatment solution may be in the range from 0.01 mol/L to 0.8 mol/L. For example it may be at least 0.02, 0.03, 0.05, 0.08, 0.1, 0.15 or 0.2 mol/L. It may be 0.7, 0.6, 0.4 0.3, 0.25, 0.2 or 0.15 mol/L or less. Where the treatment solution comprises lithium ions it may be preferred that the concentration of aluminium ions is in the range from 0.03 to 0.2, e.g. 0.08 to 0.15 mol/L. Where the treatment solution does not comprise lithium ions or comprises a low level of lithium ions, it may be preferred that the concentration of aluminium ions is in the range from 0.03 to 0.55, e.g. 0.08 to 0.4 or 0.15 to 0.3 mol/L.

It may be preferred that the treatment solution does not comprise cobalt ions. As used herein, where it is stated that the treatment solution does not comprise cobalt ions, this is intended to mean that the treatment solution as prepared does not comprise intentionally added cobalt ions. As the skilled person will understand, when the particulate lithium nickel oxide material is contacted with the treatment solution, cobalt from the lithium nickel oxide material may become dissolved in the solution. A treatment solution comprising cobalt ions originating substantially only from the lithium nickel oxide material added during the method of the present invention may be considered to be a treatment solution which does not comprise cobalt ions. For example, the treatment solution as prepared may have a concentration of cobalt ions of 0.005 mol/L or less, e.g. 0.001 mol/L or less or 0.0001 mol/L or less. The concentration of cobalt ions in the treatment solution as prepared may be substantially zero.

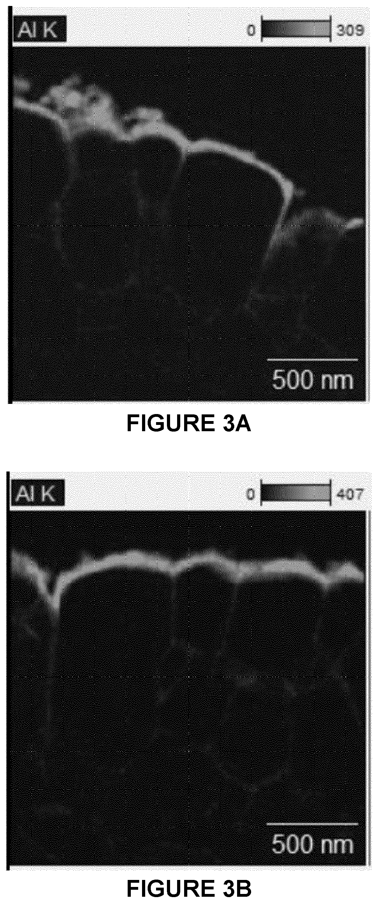

The enriched lithium nickel oxide material comprises a core comprising a plurality of grains and enriched regions at the surface of the core and at the grain boundaries within the core, the enriched regions comprising a higher concentration of aluminium than the core. It may be preferred that the enriched regions include a higher concentration of cobalt than the core. The presence of a higher concentration of aluminium (or cobalt) in the enriched regions may be determined using FIB-TEM, for example using the method set out in the Examples below. Figures 3A and 3B give FIB-TEM images evidencing a higher concentration of aluminium in the enriched regions. The increased concentration in the enriched region may be sufficient to be observable by visual review of elemental maps obtained by FIB-TEM. As used herein, the term "grain boundary" means the region at the boundary between adjacent crystal grains within a particle of lithium nickel oxide material.

Typically, the DSC onset temperature of the enriched lithium nickel oxide cathode material is at least 213°C, e.g. at least 215°C, at least 218°C or at least 220°C. It may be less than 250°C or 230°C. The DSC onset temperature may be determined by carrying out the DSC determination process as set out in the Examples section, using a Netzsch Phoenix 204 F1 DSC instrument, and determining onset temperature using the inbuilt onset finding feature in the Netzsch Proteus Analysis Version 7 software.

Typically, the DSC peak temperature of the enriched lithium nickel oxide cathode material is at least 230°C, e.g. at least 231°C, at least 232°C or at least 234°C. It may be less than 280°C or 250°C. The DSC onset temperature may be determined by carrying out the DSC determination process as set out in the Examples section, using a Netzsch Phoenix 204 F1 DSC instrument, and determining peak temperature using the inbuilt peak finding feature in the Netzsch Proteus Analysis Version 7 software.

The particulate (enriched) lithium nickel oxide material typically has a D50 particle size of at least 4 µm, e.g. at least 5 µm, at least 5.5 µm, at least 6.0 µm or at least 6.5 µm. The particles of lithium nickel oxide (e.g. secondary particles) typically have a D50 particle size of 20 µm or less, e.g. 15 µm or less or 12 µm or less. Unless otherwise specified herein, the D50 particle size refers to Dv50 (volume median diameter) and may be determined by using the method set out in ASTM B822 of 2017 under the Mie scattering approximation, for example using a Malvern Mastersizer 3000.

The D10 particle size of the material may be from about 0.1 µm to about 10 µm, for example about 1 µm to about 10 µm, about 2 µm to about 8 µm, or from about 5 µm to about 7 µm. Unless otherwise specified herein, the D10 particle size refers to Dv10 (10% intercept in the cumulative volume distribution) and may be determined by using the method set out in ASTM B822 of 2017 under the Mie scattering approximation, for example using a Malvern Mastersizer 3000.

The D90 particle size of the material may be from about 10 µm to about 40 µm, for example from about 12 µm to about 35 µm, about 12 µm to about 30 µm, about 15 µm to about 25 µm or from about 16 µm to about 20 µm. Unless otherwise specified herein, the D90 particle size refers to Dv90 (90% intercept in the cumulative volume distribution) and may be determined by using the method set out in ASTM B822 of 2017 under the Mie scattering approximation, for example using a Malvern Mastersizer 3000.

The method comprises contacting particulate lithium nickel oxide cathode material with a treatment solution to provide a treatment slurry. For example, the particulate lithium nickel oxide cathode material may be immersed in the treatment solution. The particulate lithium nickel oxide material is typically contacted with (e.g. immersed in) the treatment solution at a temperature of 1-100°C, for example 20-80 °C or 30-70 °C. The particulate lithium nickel oxide material is typically contacted with (e.g. immersed in) the treatment solution for a period of 1 minute to 24 hours, for example 1 minute to 5 hours, 1 minute to 1 hour, or 5 to 30 minutes. The treatment slurry may be heated under reflux.

The method comprises drying the treatment slurry. The drying step may be carried out by any suitable drying process such as processes involving heating and/or evaporation. Spray drying may be preferred.

The intermediate treated material is calcined to provide an enriched lithium nickel oxide material. The calcination step may be carried out at a temperature of at least 400 °C, at least 500 °C, at least 600 °C or at least 650 °C. The calcination step may be carried out at a temperature of 1000 °C or less, 900 °C or less, 800 °C or less or 750 °C or less. During the calcination, the enriched lithium nickel oxide material to be calcined may be at a temperature of 400 °C, at least 500 °C, at least 600 °C or at least 650 °C for a period of at least 30 minutes, at least 1 hour or at least 2 hours. The period may be less than 24 hours.

The calcination step may be carried out under a CO₂-free atmosphere. For example, CO₂-free air may be flowed over the materials to be calcined during calcination and optionally during cooling. The CO₂-free air may, for example, be a mix of oxygen and nitrogen. The CO₂-free atmosphere may be oxygen (e.g. pure oxygen). Preferably, the atmosphere is an oxidising atmosphere. As used herein, the term "CO₂-free" is intended to include atmospheres including less than 100 ppm CO₂, e.g. less than 50 ppm CO₂, less than 20 ppm CO₂ or less than 10 ppm CO₂. These CO₂ levels may be achieved by using a CO₂ scrubber to remove CO₂.

The method may include one or more milling steps, which may be carried out at any point, for example before the contact with the treatment solution, after drying the treatment slurry and/or after calcining the intermediate treated material. The nature of the milling equipment is not particularly limited. For example, it may be a ball mill, a planetary ball mill or a rolling bed mill. The milling may be carried out until the particles reach the desired size. For example, the particles of lithium nickel oxide (e.g. secondary particles) are typically milled until they have a D50 particle size of at least 4.5 µm, e.g. at least 5 µm, at least 6 µm or at least 6.5 µm. The particles of lithium nickel oxide (e.g. secondary particles) are typically milled until they have a D50 particle size of 15 µm or less, e.g. 14 µm or less or 13 µm or less.

The method of the present invention may further comprise the step of forming an electrode (typically a cathode) comprising the enriched lithium nickel oxide material. Typically, this is carried out by forming a slurry of the particulate enriched lithium nickel oxide, applying the slurry to the surface of a current collector (e.g. an aluminium current collector), and optionally processing (e.g. calendaring) to increase the density of the electrode. The slurry may comprise one or more of a solvent, a binder, carbon material and further additives.

Typically, the electrode will have an electrode density of at least 2.5 g/cm³, at least 2.8 g/cm³ or at least 3 g/cm³. It may have an electrode density of 4.5 g/cm³ or less, or 4 g/cm³ or less. The electrode density is the electrode density (mass/volume) of the electrode, not including the current collector the electrode is formed on. It therefore includes contributions from the active material, any additives, any additional carbon material, and any remaining binder.

The method of the present invention may further comprise constructing a battery or electrochemical cell including the electrode comprising the enriched lithium nickel oxide material. The battery or cell typically further comprises an anode and an electrolyte. The battery or cell may typically be a secondary (rechargeable) lithium (e.g. lithium ion) battery.

The present invention will now be described with reference to the following examples, which are provided to assist with understanding the present invention, and are not intended to limit its scope.

### Examples

### Sample Preparation

Lithium nickel oxide material (60g, Li_{1.031}Ni_{0.904}Co_{0.080}Mg_{0.008}O₂) was added with stirring to deionised water (30 mL) which had been pre heated to 60°C under reflux. The slurry was allowed to equilibrate to 60°C. Nitrate salts (quantities in Table 1 below) were dissolved in 20mL deionised water and added to the lithium nickel oxide material slurry. A further 10 mL deionised water was used to wash in the nitrate solution. The slurry was stirred for 10 minutes at 60°C, and then spray dried to collect the treated powder intermediate. The powder collected was placed in a fully dense alumina crucible and calcined in a furnace under an atmosphere of 20% O₂, 80% N₂ with a total gas flow rate of 1 L/min. The calcination profile ramped at 5°C/min to 130°C, with a 5.5h hold, then a 5°C/min ramp to 450°C with a 1h hold, and then a 2°C/min ramp to 700°C with a 2h hold. The sample was then furnace cooled to below 200°C before removal. The calcined material was milled for 5 minutes in a ball mill using YSZ milling media (400g, 0.5" cylindrical) in a 0.3 gal mill pot.

**Table 1**

| **Sample** | **Nitrate Quantities** | | **Metal Concentrations** | | **Al wt%** | **Li wt%** |
|---|---|---|---|---|---|---|
| | Al(NO₃)₃.9H₂O (g) | LiNO₃ (g) | [Al] (mol/L) | [Li] (mol/L) | | |
| 1 | 1.47 | 0 | 0.0653 | 0 | 0.64 | 0 |
| 2 | 2.94 | 0 | 0.131 | 0 | 1.28 | 0 |
| 3 | 5.87 | 0 | 0.261 | 0 | 2.56 | 0 |
| 4 | 11.47 | 0 | 0.510 | 0 | 5 | 0 |
| 5 | 22.93 | 0 | 1.019 | 0 | 10 | 0 |
| 6 | 68.80 | 0 | 3.057 | 0 | 30 | 0 |
| 7 | 1.47 | 0.27 | 0.065 | 0.0653 | 0.64 | 0.65 |
| 8 | 2.94 | 0.54 | 0.131 | 0.131 | 1.28 | 1.3 |
| 9 | 5.87 | 1.09 | 0.261 | 0.263 | 2.56 | 2.6 |
| 10 | 11.47 | 2.13 | 0.510 | 0.515 | 5 | 5.1 |
| 11 | 22.93 | 4.26 | 1.019 | 1.030 | 10 | 10.1 |
| 12 | 68.80 | 12.77 | 3.057 | 3.087 | 30 | 30.3 |

The elemental composition of the samples was determined by ICP (Inductively Coupled Plasma) analysis. For that, 0.1 g of material are digested with aqua regia (3:1 ratio of hydrochloric acid and nitric acid) at ∼130°C and made up to 100 mL. The ICP-OES analysis was carried out on an Agilent 5110 using matrix matched calibration standards and yttrium as an internal standard. The lines and calibration standards used were instrument-recommended. The ICP compositions are given in Table 2 below.

**Table 2**

| **Sample** | **Product Formula (ICP)** |
|---|---|
| 1 | Li_{1.010}Ni_{0.905}Co_{0.080}Mg_{0.009}Al_{0.006}O₂ |
| 2 | Li_{1.006}Ni_{0.900}Co_{0.080}Mg_{0.009}Al_{0.012}O₂ |
| 3 | Li_{0.996}Ni_{0.893}Co_{0.079}Mg_{0.008}Al_{0.024}O₂ |
| 4 | Li_{0.978}Ni_{0.878}Co_{0.078}Mg_{0.008}Al_{0.046}O₂ |
| 5 | Li_{0.944}Ni_{0.847}Co_{0.075}Mg_{0.008}Al_{0.091}O₂ |
| 6 | Li_{0.830}Ni_{0.748}Co_{0.066}Mg_{0.007}Al_{0.238}O₂ |
| 7 | Li_{1.013}Ni_{0.904}Co_{0.080}Mg_{0.009}Al_{0.007}O₂ |
| 8 | Li_{1.013}Ni_{0.898}Co_{0.079}Mg_{0.009}Al_{0.013}O₂ |
| 9 | Li_{1.009}Ni_{0.888}Co_{0.078}Mg_{0.008}Al_{0.025}O₂ |
| 10 | Li_{1.008}Ni_{0.869}Co_{0.077}Mg_{0.008}Al_{0.046}O₂ |
| 11 | Li_{1.010}Ni_{0.829}Co_{0.073}Mg_{0.008}Al_{0.089}O₂ |
| 12 | Li_{1.012}Ni_{0.703}Co_{0.062}Mg_{0.007}Al_{0.227}O₂ |

### Differential Scanning Calorimetry (DSC) Testing

The samples were subjected to DSC testing by the following method:
Coin cells were built using a lithium anode and 1M LiPF6 in 1:1:1 EC (ethylene carbonate) : EMC (ethyl methyl carbonate) : DMC (dimethyl carbonate) + 1 wt% VC (vinylene carbonate) electrolyte. The cells were cycled twice at 0.1C at 23°C and a voltage window of 3.0-4.3V vs Li/Li+, and charged to 4.3 V vs Li/Li+ at a 0.1C with a constant current-constant voltage step. The charged cells were opened under an Ar atmosphere. The electrodes were removed, washed in DMC and dried under vacuum. A 4mm diameter disc of electrode was cut and placed into an aluminium DSC crucible, which was sealed under Ar. The crucible lid was pierced by a robot during insertion into the DSC furnace, and the DSC signal was measured against an empty reference crucible from 20°C to 400°C at a ramp rate of 5°C/min, under N₂ flow. A baseline correction was applied using the DSC response from an additional empty crucible measured versus the reference crucible. The DSC instrument was a Netzsch Phoenix 204 F1.

The DSC onset and peak temperatures were calculated using Netzsch Proteus Analysis Version 7 software, using inbuilt onset determination and peak finding features.

The results are shown in Table 3 below.

**Table 3**

| **Sample** | **DSC Onset Temperature (°C)** | **DSC Peak Temperature (°C)** |
|---|---|---|
| 1 | 214.5 | 231.3 |
| 2 | 216.4 | 231.3 |
| 3 | 221.6 | 234.1 |
| 7 | 219.2 | 231.4 |
| 8 | 218.2 | 232.0 |
| 9 | 221.2 | 236.1 |

The results illustrate that increasing the amount of Al in the treatment solution results in a higher DSC onset temperature and DSC peak temperature, indicating higher thermal stability of the materials and improved safety. For an equivalent amount of Al in the treatment solution, the presence of lithium in the solution results in slightly higher DSC onset and peak temperatures.

### Electrochemical Testing

Electrodes were made in a 94:3:3 active:carbon:binder formulation with an ink at 65 % solids. 0.6 g of SuperC65 carbon was mixed with 5.25 g of N-methyl pyrrolidone (NMP) in a Thinky® mixer. 18.80 g of active material was added and further mixed using the Thinky® mixer. Finally, 6.00 g of Solef® 5130 binder solution (10 wt% in NMP) was added and mixed in the Thinky® mixer. The resulting ink was cast onto aluminium foils using a 125 µm fixed blade coater and dried at 120 °C for 60 minutes. Once dry, the electrode sheet was calendared in an MTI calendar to achieve a density of 3 g/cm³. Individual electrodes were cut and dried under vacuum overnight before transferring to an argon filled glovebox. Coin cells were built using a lithium anode and 1M LiPF6 in 1:1:1 EC (ethylene carbonate): EMC (ethyl methyl carbonate) : DMC (dimethyl carbonate) + 1 wt% VC (vinylene carbonate) electrolyte. Electrodes selected had a loading of 9.0 mg/cm² and a density of 3 g/cm³. Electrochemical measurements were taken from averages of three cells measured at 23 °C, and a voltage window of 3.0-4.3V.

Electrochemical characteristics evaluated were 0.1C specific capacity and capacity retention (after 50 cycles at 1C). The results are shown in Table 3 below.

**Table 3**

| **Sample** | **0.1C Capacity (mAh/g)** | **Capacity retention (%)** |
|---|---|---|
| 1 | 211.9 | 92.4 |
| 2 | 208.6 | 93.6 |
| 3 | 199.5 | 93.9 |
| 4 | 187.8 | 93.8 |
| 5 | 163.4 | 91.6 |
| 6 | 52.7 | 33.5 |
| 7 | 206.3 | 91.7 |
| 8 | 211.0 | 94.4 |
| 9 | 204.1 | 93.8 |
| 10 | 191.2 | 92.4 |
| 11 | 176.6 | 77.2 |
| 12 | 140.2 | 90.9 |

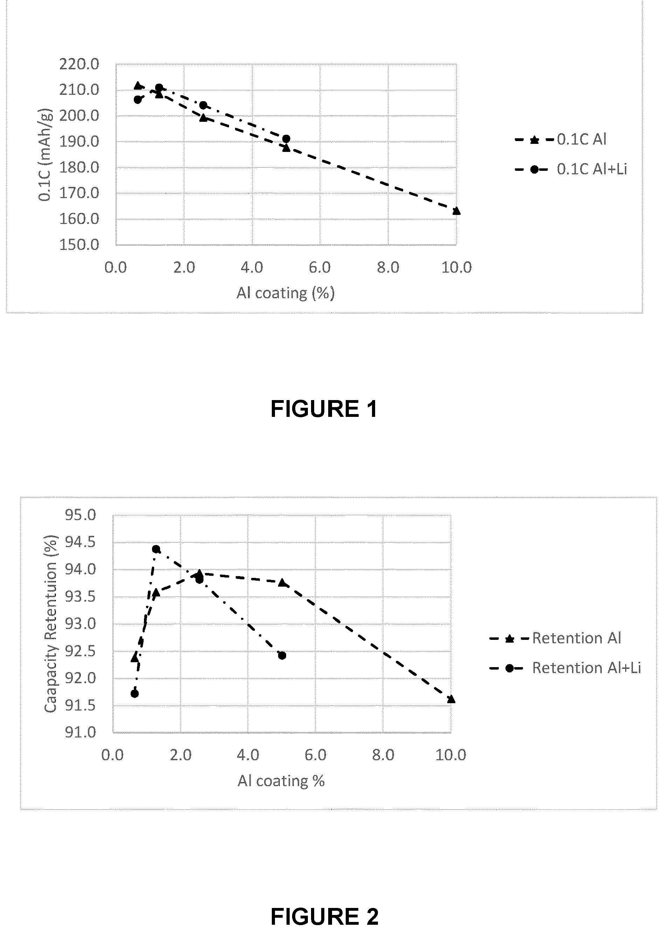

Figure 1 shows the dependence of capacity at 0.1C on wt% Al added in the treatment step, illustrating that increasing Al content results in a significant loss in capacity. Good capacity levels are achieved up to approximately 4 wt% Al in the coating.

Figure 2 shows the dependence of capacity retention (1C, 50 cycles) on wt% Al added in the treatment step, illustrating that an improvement is seen above about 0.8wt% which begins to tail off above about 1.9 wt% Al where Li is included in the treatment solution, and above about 5.5 wt% where Li is not included in the treatment solution.

### FIB-TEM and Elemental Mapping

Sample 3 was subjected to FIB-TEM analysis. The sample (cross-section) was prepared using a focused ion beam instrument with a gallium ion beam at 30 kV. Final polishing was performed at 5 kV. The sample was examined using a JEM 2800 Scanning Transmission Electron Microscope using the following instrument conditions: Voltage (kV) 200; C2 aperture (µm) 70 and 40. Compositional analysis by X-ray emission detection was carried out in the scanning mode. Two regions of the sample are shown in Figures 3A and 3B. The brighter areas show areas of greater aluminium concentration, indicating regions of higher Al concentration at the surface of the particle, and in the grain boundaries.

## Claims

1. A method of increasing the differential scanning calorimetry onset temperature of a lithium nickel oxide cathode material, the method comprising
(a) contacting particulate lithium nickel oxide cathode material with a treatment solution comprising aluminium ions and optionally lithium ions to provide a treatment slurry;
(b) drying the treatment slurry to provide an intermediate treated material; and
(c) calcining the intermediate treated material to provide an enriched lithium nickel oxide cathode material comprising (i) a core comprising a plurality of grains and (ii) enriched regions at the surface of the core and at the grain boundaries within the core, the enriched regions comprising a higher concentration of aluminium than the core,
wherein the amount of aluminium ions included in the treatment solution is selected to provide 0.8 to 5.5 wt% aluminium based on the weight of metals in the lithium nickel oxide cathode material to be treated, excluding lithium.

2. A method according to claim 1 wherein
where the treatment solution contains lithium ions, the amount of aluminium ions in the treatment solution is selected to provide 0.8 to 1.9 wt% aluminium based on the weight of metals in the lithium nickel oxide cathode material to be treated, excluding lithium; and
where the treatment solution does not comprise lithium or has a lithium ion concentration of 0.005 mol/L or less, the amount of aluminium ions in the treatment solution is selected to provide 1 to 3.5 wt% aluminium based on the weight of metals in the lithium nickel oxide cathode material to be treated, excluding lithium.

3. A method according to any one of the preceding claims wherein the lithium nickel oxide cathode material contacted with the treatment solution has a formula according to Formula I:
LiₐNiₓCo_{y}Mg_{z}M_{q}O_{2+b} Formula I
in which
0.8 ≤ a ≤ 1.2
0.7 ≤ x < 1
0 ≤ y ≤ 0.3
0 ≤ z ≤ 0.1
0 ≤ q ≤ 0.2, and
-0.2 ≤ b ≤ 0.2;
wherein M is selected from Al, Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

4. A method according to any one of the preceding claims wherein the enriched lithium nickel oxide cathode material has a formula according to Formula II:
LiₐNiₓCo_{y}Mg_{z}AlₚM1_{q}O_{2+b} Formula II
in which
0.8 ≤ a ≤ 1.2
0.7 ≤ x < 1
0 ≤ y ≤ 0.3
0 ≤ z ≤ 0.1
0.005 ≤ p ≤ 0.07
0 ≤ q ≤ 0.2, and
-0.2 ≤ b ≤ 0.2;
wherein M1 is selected from Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

5. A method according to claim 4 wherein 0.01 ≤ p ≤ 0.055 or 0.02 ≤ p ≤ 0.04 and the treatment solution does not comprise lithium ions or has a lithium ion concentration of 0.005 mol/L or less.

6. A method according to claim 4 wherein the treatment solution comprises lithium ions and 0.009 ≤ p ≤ 0.02.

7. A method according to claim 4 wherein in Formula II
0.95 ≤ a ≤ 1.05
0.85 ≤ x < 0.95
0.02 ≤ y ≤ 0.1
0.002 ≤ z ≤ 0.02
0.015 ≤ p ≤ 0.03
0 ≤ q ≤ 0.05, and
-0.1 ≤ b ≤ 0.1
and wherein the treatment solution does not comprise lithium ions or has a lithium ion concentration of 0.005mol/L or less.

8. A method according to claim 4 wherein in Formula II
0.95 ≤ a ≤ 1.05
0.85 ≤ x < 0.95
0.02 ≤ y ≤ 0.1
0.002 ≤ z ≤ 0.02
0.008 ≤ p ≤ 0.015
0 ≤ q ≤ 0.05, and
-0.1 ≤ b ≤ 0.1
and wherein the treatment solution comprises lithium ions.

9. A method according to any one of the preceding claims wherein the concentration of aluminium ions in the treatment solution is in the range from 0.01 mol/L to 0.8 mol/L.

10. A method according to any one of the preceding claims wherein the DSC onset temperature of the enriched lithium nickel oxide cathode material is at least 218°C.

11. A method according to any one of the preceding claims wherein the DSC peak temperature of the enriched lithium nickel oxide cathode material is at least 232°C.

12. A method according to any one of the preceding claims further comprising the step of forming an electrode (e.g. cathode) comprising the enriched lithium nickel oxide material.

13. A method according to claim 12 further comprising the step of forming a battery or electrochemical cell including the electrode.

14. Use of a treatment solution comprising aluminium ions and optionally lithium ions to increase the differential scanning calorimetry onset temperature of a lithium nickel oxide cathode material.

15. Use according to claim 14 wherein the use comprises
(a) contacting particulate lithium nickel oxide cathode material with a treatment solution comprising aluminium ions and optionally lithium ions to provide a treatment slurry;
(b) drying the treatment slurry to provide an intermediate treated material; and
(c) calcining the intermediate treated material to provide an enriched lithium nickel oxide cathode material comprising (i) a core comprising a plurality of grains and (ii) enriched regions at the surface of the core and at the grain boundaries within the core, the enriched regions comprising a higher concentration of aluminium than the core,
wherein the amount of aluminium ions included in the treatment solution is selected to provide 0.8 to 5.5 wt% aluminium based on the weight of metals in the lithium nickel oxide cathode material to be treated, excluding lithium.
